# EUROPÄISCHE PATENTSCHRIFT

(11) **EP 1 032 714 B1**
(45) Veröffentlichungstag und Bekanntmachung des Hinweises auf die Patenterteilung: **09.01.2002**
(21) Anmeldenummer: 98966146.7
(22) Anmeldetag: 06.11.1998
(51) Int. Cl.: C21C 5/52, C21C 5/56, C21B 13/02, F27B 1/08, F27B 3/08, F27D 3/00, F27B 3/18

(54) **ELEKTROLICHTBOGEN-NIEDERSCHACHT-SCHMELZOFENANLAGE MIT ELEKTRODEN ENTALTENDEM ZENTRALROHR UND VERSCHIEBBAREM OBERGEFÄSSDECKEL**
ELECTRIC ARC LOW-SHAFT SMELTING FURNACE WITH A CENTRAL TUBE WITH TELESCOPIC ELECTRODES AND A SLIDING UPPER RECEPTACLE LID
INSTALLATION DE FOUR DE FUSION A CUVE INFERIEURE ET A ARC ELECTRIQUE AVEC COUVERCLE DE CARCASSE SUPERIEURE COULISSANT ET TUBE CENTRAL A ELECTRODES TELESCOPIQUES

(30) Priorität: 21.11.1997 DE 19753184
(43) Veröffentlichungstag der Anmeldung: 06.09.2000
(73) Patentinhaber: SMS Demag AG, 40237 Düsseldorf (DE)
(72) Erfinder: MEIERLING, Peter, D-40474 Düsseldorf (DE); SCHÜRING, Andreas, D-45475 Mülheim (DE); SCHALLER, Hans-Ludwig, D-47443 Moers (DE)
(74) Vertreter: Meissner, Peter E., Dipl.-Ing.
(86) Internationale Anmeldenummer: DE9803295
(87) Internationale Veröffentlichungsnummer: WO9927141

(56) Entgegenhaltungen:
- EP-A- 0 291 701
- EP-A- 0 630 977
- EP-A- 0 770 690
- DE-A- 4 236 510
- US-A- 4 371 392
- REICHELT W ET AL: "CONTIARC - EIN ENERGIEOPTIMIERTES UND UMWELTSCHONENDES SCHROTTSCHMELZVERFAHREN" STAHL UND EISEN, Bd. 116, Nr. 5, 20. Mai 1996, Seiten 89-92, 150, XP000590158

## Beschreibung

Die Erfindung betrifft eine Schmelzofenanlage und ein Verfahren zum Einschmelzen von Metallen, insbesondere Stahlschrott, mit einem Ofenuntergefäß, in dessen Boden ein Abstichloch vorgesehen ist, und mit einem Ofenobergefäß, das durch einen Deckel verschließbar ist, bei dem koaxial zur Ofenhauptachse ein Zentralrohr vorgesehen ist, in dem mindestens eine Elektrode angeordnet ist, und an dem ein das Ofenobergefäß umgreifendes Bauteil vorgesehen ist, das mit einer Gasabzugseinrichtung verbindbar ist, sowie Mittel zum Zuführen der Charge, ein Verfahren zum Betreiben einer zuvor genannten Schmelzofenanlage sowie einer Vorrichtung zum Aufblasen von Sauerstoff.

Aus DE-OS 19 37 839 ist ein Verfahren und ein Lichtbogenofen zum kontinuierlichen Schmelzen von Eisenschrott bekannt, bei dem der Beschickungsraum in seinem Oberteil vom Brennraum des Ofens durch eine Schutzwand getrennt ist. im Unterteil wird die nachrutschende Böschung des Ausgangsproduktes der Strahlung des Lichtbogens ausgesetzt und das geschmolzene Produkt wird durch bekannte in dem Brennraum angeordnete Mittel abgelassen.

Bei dem hierzu erforderlichen Ofen wird die Charge nur zu einem Teil um die Elektroden herum geführt. Darüber hinaus ragen die Elektroden von oben durch einen Deckel in das Schmelzgefäß hinein.

Aus DE-AS 23 42 959 ist ein Schachtofen bekannt, bei dem die an einer Führung am unteren Ende angebrachten Elektroden durch die Beschickungssäule geführt werden und die Elektroden in einem solchen Abstand vom Boden des Schachtofens gehalten sind, daß sich ein etwa kugelförmiger Aufschmelzraum bildet.

Nachteil dieser Vorrichtung ist es, daß eine Änderung der Lichtbogenlänge durch vertikales Verfahren der Elektroden nicht möglich ist, da die Führung nahezu fest in der Schrottsäule gehalten wird.

Weiterhin ist aus der DE 42 36 510 C2 eine Einrichtung zum Schmelzen von Schrott bekannt, bei der ein Lichtbogenofen mit einer in einem Gefäß eines mit Gleichstrom betriebenen Schachtofens hineinragende Anode aufweist. Am Gefäßboden ist eine Kathode vorgesehen. Die Anode wird konzentrisch von einem Rohr umgeben und ist relativ zu diesem verfahrbar.

Bei dieser Ofenform ist eine Zuführung einer Charge von oben großflächig auf die Gesamtteufe kaum möglich.
Weiterhin ist im Gegensatz zum Betreiben mit Drehstrom bei dem bekannten Schachtofen im Boden des Untergefäßes die Gegenelektrode anzuordnen, was zu besonderen Schwierigkeiten bei der Standzeit des Ofenuntergefäßes führt.

Die Erfindung hat sich das Ziel gesetzt, mit konstruktiv einfachen Mitteln eine Schmelzanlage zu schaffen, mit der kostengünstig ein kontinuierliches Schmelzen von Metallen, insbesondere von Schrott wie auch von Erzen möglich ist, und bei der die Umwelt weitgehenst geschont wird.

Die Erfindung erreicht dieses Ziel durch die kennzeichnenden Merkmale des Anspruchs 1 und des Verfahrensanspruchs 13 sowie des Vorrichtungsanspruches 16.

Erfindungsgemäß wird ein Gefäß vorgeschlagen, das ein zentrales Rohr besitzt und einen relativ hohen Schacht aufweist. Durch diese Anordnung wird es möglich, sehr sicher Chargen ringförmig durch den Ofen zu führen und gleichzeitig durch aufsteigende Abgase vorzuwärmen.

Dieses Gefäß kann zum einen als Schmelzofen eingesetzt werden, der mit Drehstrom betriebenen Elektroden gefahren wird. Diese Elektroden werden von einem Tragarm gehalten, der seitwärts durch eine Hülse geführt ist, an welchem auch das Zentralrohr befestigt ist.

Die Elektroden sind geschützt in den Innenraum des Zentralrohres untergebracht und ragen im Mündungsbereich heraus, wobei die Strahlungswärme die ringförmig herabsinkende Charge aufschmilzt.

Zur Unterstützung der Schmelzleistung können Brenner eingesetzt werden, die mit fossilen Brenngasen, beispielsweise Erdgas unterstützt werden. Weiterhin kann durch diese Lanzen auch Sauerstoff im unteren Bereich hineingeblasen werden.

Weiterhin wird erfindungsgemäß vorgeschlagen, in das Zentralrohr eine Sauerstofflanze einzubringen. Diese Sauerstofflanze besitzt eine eigene Tragvorrichtung und ist unabhängig von dem Elektrodentragarm verfahrbar. In einer vorteilhaften Ausgestaltung wird diese Sauerstofflanze von oben mittig zwischen den Elektroden in das metallurgische Gefäß gefahren. In einer weiteren Ausgestaltung wird die Lanze durch eine außerhalb des Ofens vorgesehene Biegeeinrichtung verbogen und im Halbkreisbogen durch die Hülse geführt und so portioniert, daß ihre Spitze exakt auf der Ofenhauptachse sich befindet. Mit einfachen Mitteln kann die Lanze aus ihrer Position komplett heraus bewegt werden.
Beim Einsatz von Sauerstoff kann das metallurgische Gefäß wie ein Koverter betrieben werden. Hier kann also Roheisen chargiert werden und gleichzeitig kohlenstoffarme Eiseneinsatzstoffe sowie die üblichen Zugaben von Kalk und ähnlichen Zusätzen.

Durch einfaches Abschalten der Sauerstoffzufuhr und Einschalten der elektrischen Energie kann unmittelbar das metallurgische Gefäß vom Konverterbetrieb auf den Betrieb eines Elektrolichtbogenofens umgestellt werden.

In einer vorteilhaften Weiterbildung wird das Zentralrohr bei dieser Verfahrweise relativ weit vom Gefäßboden entfernt.

Bei der späteren Phase des Einbringens von Wärmeenergie über einen elektrischen Lichtbogen wird das Zentralrohr wieder dem Boden genähert und dient dann sowohl der Führung der Charge wie dem Schutz der Elektroden.

Ein Beispiel der Erfindung ist in der beigefügten Zeichnung dargelegt. Dabei zeigen die
- Figur 1: das Schema einer Schmelzofenanlage
- Figur 2: einen Schnitt durch den Elektrodentragarm
- Figur 3: die Materialzufuhr
- Figur 4: die Materialhalteeinrichtung
- Figur 5: ein metallurgisches Gefäß als Konverter
- Figur 6: ein metallurgisches Gefäß mit Aufblaslanze.

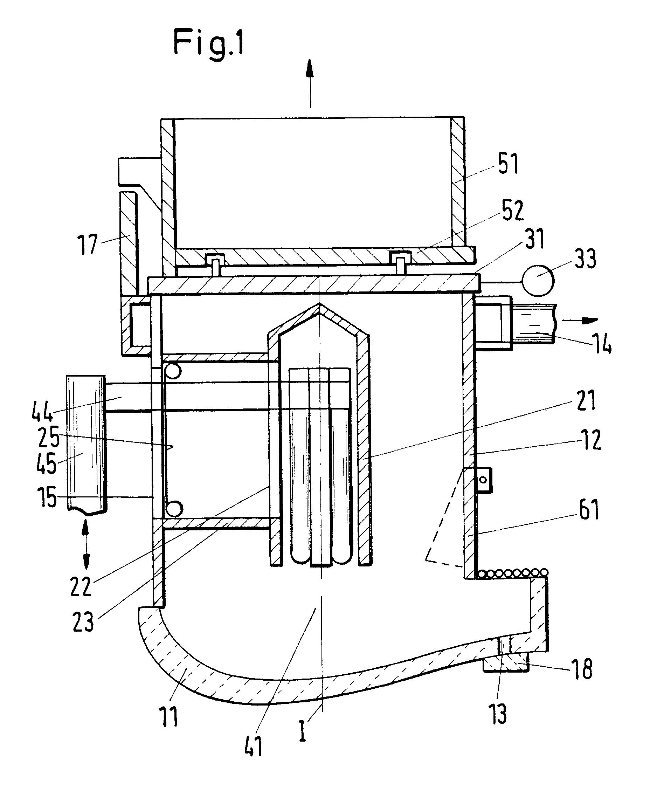

Die Figur 1 zeigt einen Schmelzofen, mit einem Ofenuntergefäß 11, das einen durch eine Absperrung 18 verschließbaren Bodenabstich 13 aufweist und ein Ofenobergefäß 12, das durch einen Deckel 31 verschlossen ist. Am Kopf des Ofenobergefäßes 12 ist eine Gasabzugseinrichtung 14 vorgesehen und im unteren Teil des Ofenobergefäßes sind Schwenkklappen angebracht.

Koaxial zum zylindrischen Ofenobergefäß 12 ist ein Zentralrohr 21 angeordnet, das über eine Hülse 23 am Ofenobergefäß 12 befestigt ist. Im Bereich der Hülse 23 sind ein Zentralrohr 21 ein Schlitz 22 und am Ofenobergefäß 12 ein Gefäßschlitz 15 vorgesehen.
Der durch die Hülse 23 gebildete innere Freiraum ist durch eine Jalousie 25 gasdicht verschließbar.

Durch die Hülse ist ein Elektrodentragarm 44 geführt, der sich einenends auf einer Tragsäule 45 abstützt und anderenends Elektroden 41 bis 43 trägt.

Oberhalb des Ofenobergefäßes 12 ist ein Behälter 51 vorgesehen, der sich über Stützarme 17 auf dem Ofenobergefäß 12 abstützt.

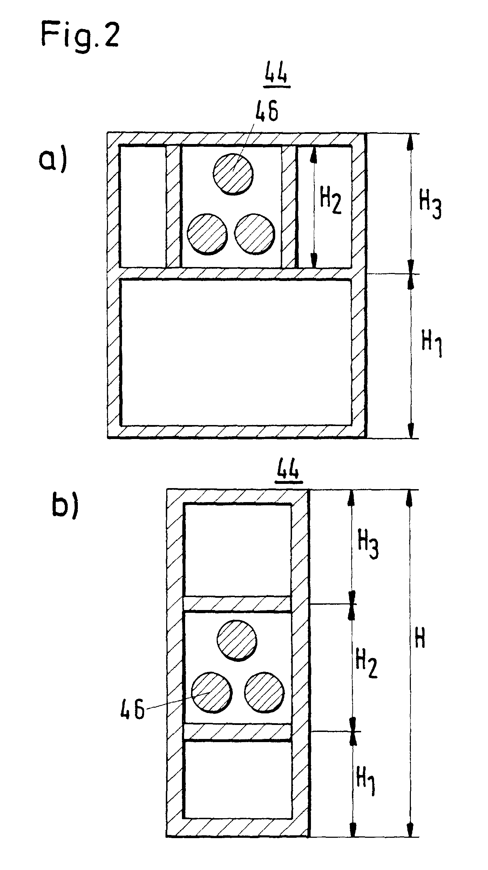

Die Figur 2 zeigt die Stromführungen 46 in dem Elektrodentragarm 44. Sowohl im oberen wie im unteren Bild setzt sich die biegerelevante Höhe H zusammen aus den Einzelhöhen der Seitenteile und zwar H1+H2+H3.

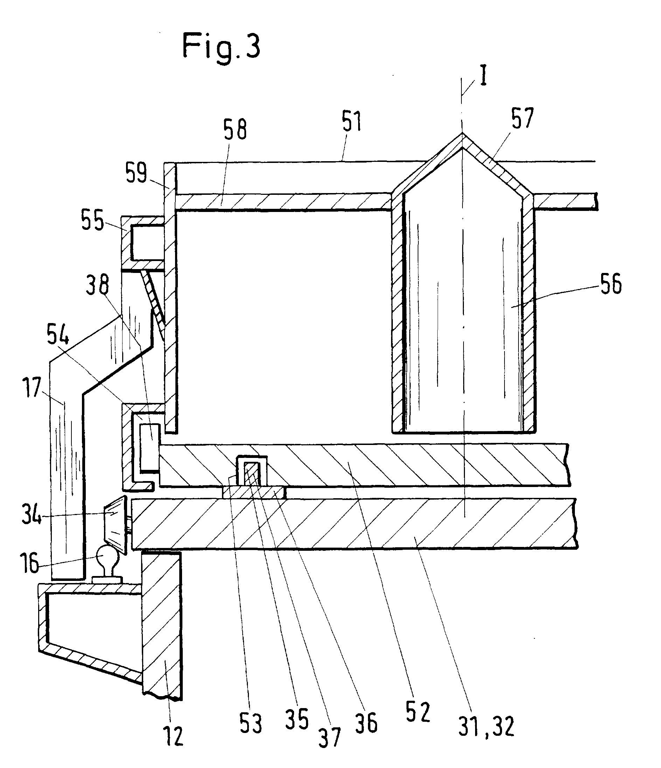

Figur 3 zeigt einen Behälter 51, der als Chargierkorb ausgebildet ist, wie er sich auf dem Oberteil des Ofenobergefäßes 12 absetzt. Der Behälter 51 besitzt ein zentral angeordnetes Schutzrohr 56, das über Aufhängungen 58 gehalten wird. Das Schutzrohr 56 ist an einer Seite durch einen Hut 57 abgedeckt.

Der Boden 52 des Behälters 51 besitzt einen Führungsrand 38, der in einem Führungsteil 54 des Behälters 51 in eine Schließ- und eine Öffnungsstellung führbar ist.

Im Boden 52 sind Unterteile 53 vorgesehen, in die Vaterteile 37 hineinragen, die über eine Stützplatte 36 mit dem als Schieberplatte 32 ausgebildeten Deckel 31 verbunden sind.

Beim Aufsetzen des Behälters 51 stützen sich Konsolen 55 auf Stützarme 17 ab, welche mit dem Ofenobergefäß 12 verbunden sind. Bei diesem Abstützen wird der Führungsrand 38 des Bodens 52 des Behälters 51 in dem Führungsteil 54 entlastet, wobei der Boden 52 sich auf den Stützplatten 36 und damit auf der Schieberplatte 32 frei auflegt.

Die Schieberplatte 32 besitzt im vorliegenden Fall Räder 34, die über Schienen 16, welche am Ofenobergefäß 12 befestigt sind, laufen. Zum Chargieren kann also mit relativ geringer Kraft der Deckel 31, der das Ofenobergefäß 12 verschließt, einschließlich des Bodens 52 bewegt werden und die Charge fällt aus dem Behälter 51 heraus.

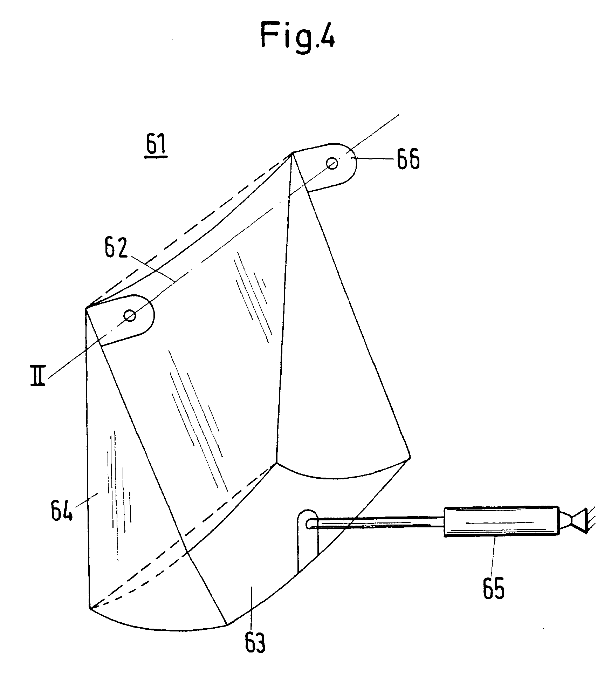

Die Figur 4 zeigt Schwenkklappen 61, die im unteren Teil des Ofenobergefäßes 12 vorgesehen sind, und mit denen die Charge in ihrer Absenkgeschwindigkeit gemindert oder auch behindert werden kann.

Die Schwenkklappen 61 besitzen eine Frontplatte 62 und eine Bodenwand 63 sowie zwei Seitenwände 64. Diese einer Tasche ähnliche Form erlaubt ein Einschwenken der Schwenkklappen 61 um die Schwenkachse II an den Laschen 66 mittels Schwenkantrieb 65.

Neben diesen Schwenkklappen 61 können auch Zinken und ähnliche Absperrelemente zum Einsatz kommen.

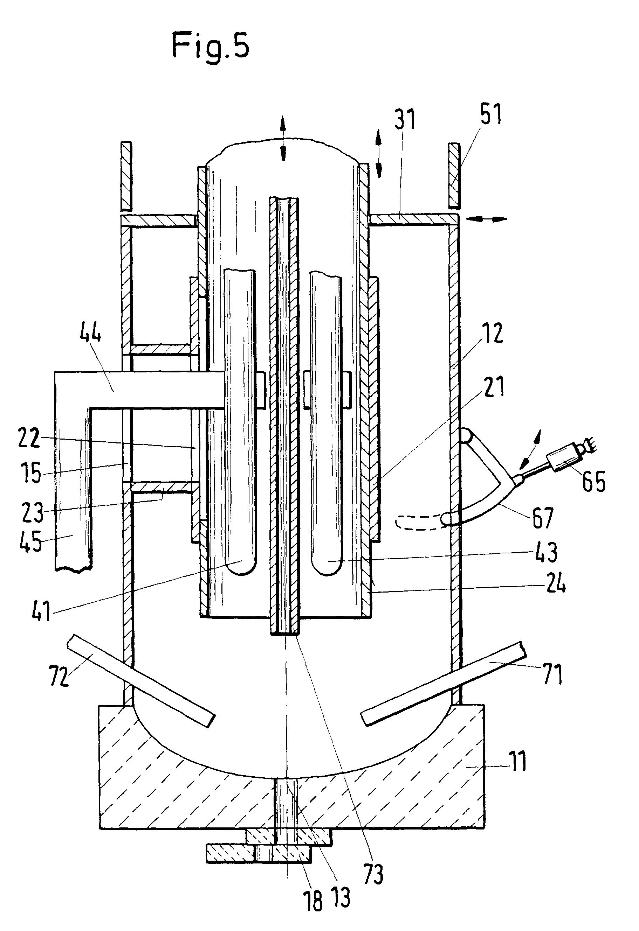

Die Figur 5 stellt ein metallurgisches Gefäß dar, mit einem Ofenuntergefäß 11, dessen Bodenabstich durch eine Absperrung 18 verschließbar ist. Im unteren Teil des Ofenobergefäßes 12 sind Brenner 71 bzw. Lanzen 72 vorgesehen, die ins Ofeninnere hineinragen.

Weiterhin sind am Ofenobergefäß 12 Absperrelemente, hier Zinken 67 vorgesehen, die über einen Schwenkantrieb 65 ins Ofeninnere hinein oder aus diesem heraus bewegbar sind.

Am Ofenkopf ist ein Behälter 51 angedeutet.

Konzentrisch zum Zentralrohr 21 ist eine Schürze 24 vorgesehen, deren Mündung in ihrem Abstand zum Gefäßboden des Ofenuntergefäßes 11 einstellbar ist.

Weiterhin ist eine Lanze 73 vorgesehen, mit der Sauerstoff aufblasbar ist. Im vorliegenden Fall ist die Lanze zentrisch zur Ofenmittenachse I angeordnet und durch nicht weiter dargestellte Halterungen 74 lateral bewegbar.

Die Lanze 73 ist zwischen Elektroden 71 und 72 angeordnet, welche über den Elektrodentragarm 44 mit der Tragsäule 45 verbunden sind.
Mit dem in Figur 5 dargestellten metallurgischen Gefäß wird zusätzlich zu den Elektroden und dem Einbringen von elektrischer Energie eine Möglichkeit geschaffen, Sauerstoff in das Gefäß einzublasen, wie es bisher bei Konvertern bekannt ist.

Ohne daß das Ofengefäß geöffnet werden muß, kann von der Phase Frischen in die Phase Einschmelzen übergegangen werden. Hierbei werden nur die Elektroden anstelle der Sauerstofflanze in ihre Arbeitsposition gebracht.

Angepaßt an die jeweiligen Erfordernisse der aktuellen Betriebsphase in den Betriebszuständen Frischen bzw. Einschmelzen wird die Mündung des Zentralrohres bzw. hier die Schürze in ihrer Eindringtiefe in das Ofenobergefäß 12 eingestellt.

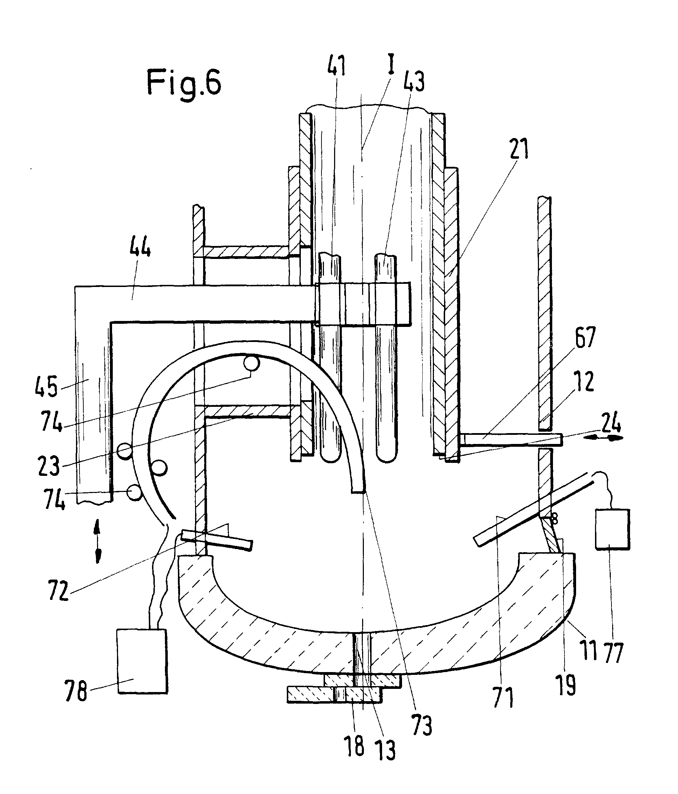

In der Figur 6 wird in Änderung zur Figur 5 die Aufblaslanze 73 durch die Hülse 23 geführt. Im vorliegenden Fall wird sie hierzu durch eine Halterung 74, die als Biegestation ausgebildet sein kann, in der Form verbogen, daß die Spitze der Aufblaslanze 73 exakt in der Position in der Ofenmittenachse I positioniert wird.

Nach Aufblasen von Sauerstoff läßt sich diese Lanze in besonders einfacher Weise aus ihrem Arbeitsbereich herausnehmen.

### Positionsliste

### Ofenanlage

- 11: Ofenuntergefäß
- 12: Ofenobergefäß
- 13: Bodenabstich
- 14: Gasabzug
- 15: Gefäßschlitz
- 16: Schienen
- 17: Stützarm
- 18: Absperrung
- 19: Schlackentür

### Zentrales Bauteil

- 21: Zentralrohr
- 22: Zentralrohr Schlitz (21)
- 23: Hülse
- 24: Schürze
- 25: Jalousie

### Abdeckung

- 31: Deckel
- 32: Schieberplatte
- 33: Antrieb
- 34: Räder
- 35: Mitnahmeelemente
- 36: Stützplatte
- 37: Vaterteil
- 38: Führungsrand

### Stromeinrichtung

- 41-43: Elektrode
- 44: Elektrodentragarm
- 45: Tragsäule
- 46: Stromzuführung

### Materialzufuhr

- 51: Behälter
- 52: Boden
- 53: Mutterteil
- 54: Führungsteil
- 55: Konsole
- 56: Schutzrohr
- 57: Hut
- 58: Aufhängung
- 59: Behältermantel

### Absperrung

- 61: Schwenkklappen
- 62: Frontplatte
- 63: Bodenwand
- 64: Seitenwand
- 65: Schwenkantrieb
- 66: Laschen
- 67: Zinken

### Energie

- 71: Brenner
- 72: Lanze
- 73: Aufblaslanze
- 74: Halterung
- 77: Versorgungsstation fossiles Brenngas
- 78: Versorgungsstation Sauerstoff

- I: Ofenhauptachse
- II: Schwenkachse

## Patentansprüche

1. Schmelzofenanlage zum Einschmelzen von Metallen, insbesondere Stahlschrott, mit einem Ofenuntergefäß, in dessen Boden ein Abstichloch vorgesehen ist, und mit einem Ofenobergefäß, das durch einen Deckel verschließbar ist, bei dem koaxial zur Ofenhauptachse ein Zentralrohr vorgesehen ist, in dem mindestens eine Elektrode angeordnet ist, und an dem ein das Ofenobergefäß umgreifendes Bauteil vorgesehen ist, das mit einer Gasabzugseinrichtung verbindbar ist,
**dadurch gekennzeichnet,**
**daß** in der Wandung des Zentralrohres (21) in Längsrichtung ein Schlitz (22) vorgesehen ist,
**daß** am Schlitzrand eine Hülse (23) befestigt ist, über die das Zentralrohr (21) an dem Mantel des einen korrespondierenden Schlitz (15) aufweisenden Ofenobergefäß (12) befestigbar ist,
**daß** durch den Hohlraum der Hülse (23) ein mit einer außerhalb des Ofens angeordneten Tragsäule (45) verbundener Tragarm (44) bis in das Zentralrohr (21) führbar ist, an dem kopfseitig mindestens eine Elektrode (41) befestigt ist.

2. Schmelzofenanlage nach Anspruch 1,
**dadurch gekennzeichnet,**
**daß** an dem Tragarm (44) drei mit Wechselstrom betriebene Elektroden (41-43) anklemmbar sind, deren Stromzuführungen (46) durch den Tragarm (44) geleitet sind.

3. Schmelzofenanlage nach Anspruch 2,
**dadurch gekennzeichnet,**
**daß** der Tragarm (44) aus einem Profil aufgebaut ist, dessen biegerelevante Höhe (H) sich zu seiner Breite (B) verhält wie
H/B = 1,5 bis 2,5/1.

4. Schmelzofenanlage nach Anspruch 1,
**dadurch gekennzeichnet,**
**daß** der Deckel (31) als Schieberplatte (32) ausgebildet ist, die durch einen Antrieb (33) quer zur Ofenhauptachse (I) verschiebbar ist.

5. Schmelzofenanlage nach Anspruch 4,
**dadurch gekennzeichnet,**
**daß** am Deckel (31) Räder (34) vorgesehen sind, die auf am Ofenobergefäß (12) vorgesehenen Schienen (16) laufen.

6. Schmelzofenanlage nach Anspruch 1,
**dadurch gekennzeichnet,**
**daß** an der Oberseite des Deckels (31) Mitnahmeelemente (35) vorgesehen sind, durch die formschlüssig eine Verbindung mit dem Boden (52) des auf dem Ofenobergefäß (12) absetzbaren Materialzufuhr-Behälter (51) herstellbar ist.

7. Schmelzofenanlage nach Anspruch 6,
**dadurch gekennzeichnet,**
**daß** die Mitnahmeelemente (35) auf einer Stützplatte (36) und einem Vaterteil (37) bestehen, und
**daß** die Stützplatte (36) soweit vom Deckel (31) wegragt, daß beim Aufsetzen des Bodens (52) des Behälters (51) auf diesen der als Führung ausgestaltete Rand (38) des Deckels (31) sich in seiner im Behälter (51) befindlichen Führungsleiste (54) entspannt.

8. Schmelzofenanlage nach Anspruch 7,
**dadurch gekennzeichnet,**
**daß** am Behälter (51) Konsolen (55) angebracht sind, die sich zentrierend auf Stützarmen (17) abstützen, welche am Ofenobergefäß (12) befestigt sind und eine Länge aufweisen, die das Entspannen der Führung der Führungsleiste (54) und der Führungswand (38) zulassen.

9. Schmelzofenanlage nach Anspruch 1,
**dadurch gekennzeichnet,**
**daß** Absperrelemente (61) vorgesehen sind, die zur Unterbrechung des Förderstroms der Charge in den Innenraum des Ofenobergefäßes (12) einbringbar sind.

10. Schmelzofenanlage nach Anspruch 9,
**dadurch gekennzeichnet,**
**daß** die Absperrelemente (61) Schwenkklappen sind, die über Schwenkantriebe (65) um eine Schwenkachse (II) in den Innenraum des Ofenobergefäßes (12) schwenkbar sind.

11. Schmelzofenanlage nach Anspruch 10,
**dadurch gekennzeichnet,**
**daß** die Schwenkklappen (61) an ihrer Frontplatte (62) eine Bodenwand (63) sowie Seitenwände (64) aufweisen, die nach dem Einschwenken der Schwenkklappen (61) die Dichtigkeit des Ofens gewährleisten.

12. Schmelzofenanlage nach Anspruch 9,
**dadurch gekennzeichnet,**
**daß** die Absperrelemente (61) als Zinken (67) ausgebildet sind, die in den Innenraum des Ofenobergefäßes (12) und aus diesem heraus ziehbar sind.

13. Schmelzofenanlage nach Anspruch 6,
**dadurch gekennzeichnet,**
**daß** der Behälter (51) ein zentral angeordnetes Schutzrohr (56) besitzt, welches durch einen Hut (57) abgeschlossen und über Aufhängungen (58) am Behältermantel (59) befestigt ist.

14. Schmelzofenanlage nach Anspruch 1,
**dadurch gekennzeichnet,**
**daß** eine Schürze (24) vorgesehen ist, die koaxial zum Zentralrohr (21) angeordnet und zu diesem in der Weise verschiebbar ist, daß die Mündung des die Elektroden (41-43) als Schutzrohr umgebenden Zentralrohr (21) in seiner Lage veränderbar ist.

15. Schmelzofenanlage nach einem der o.g. Ansprüche,
**dadurch gekennzeichnet,**
**daß** im unteren Bereich des Ofenobergefäßes (12) Lanzen (71) einbringbar sind, die an Versorgungsstationen fossiler Brenngase (77) und/oder sauerstoffhaltiger Gase (78) anschließbar sind.

16. Verfahren zum Betreiben einer Schmelzofenanlage mit einem Ofenuntergefäß, in dessen Boden eine Abstichöffnung vorgesehen ist, und einem Ofenobergefäß, das durch einen Deckel verschließbar ist, und in dem ein koaxial zur Ofenhauptachse angeordnetes Zentralrohr vorgesehen ist, in dem mindestens eine Elektrode sich befindet, sowie eine das Ofenobergefäß umgreifende Gasabzugseinrichtung, und Mittel zum Zuführen der Charge, mit einer Schmelzofenanlage nach Anspruch 1,
**gekennzeichnet durch** folgende Schritte:
- die Charge wird oberhalb des **durch** den Deckel verschlossenen Ofenobergefäß zwischengelagert,
- **durch** Öffnen des Ofendeckels fällt die Charge in den Ofeninnenraum, und zwar
a) vor Beginn des Ofenbetriebes bis in das Ofenuntergefäß
b) während des Ofenbetriebes auf die ringförmig im Ofenobergefäß befindliche, bereits vorher eingebrachte Charge
- **durch** Erzeugen möglichst langer Lichtbögen von **durch** das Zentralrohr geschützten, wechselstrombetriebenen Elektroden wird in die Charge eine Kaverne eingebrannt
- das erschmolzene Material wird über eine Abstichöffnung abgestochen.

17. Verfahren nach Anspruch 16,
**dadurch gekennzeichnet,**
**daß** der Materialstrom der ringförmig im Ofenobergefäß vorhandenen Charge durch Halte- und/oder Klemmelemente vorgebbar veränderbar ist.

18. Verfahren nach Anspruch 16,
**dadurch gekennzeichnet,**
**daß** die Regelung der Lichtbogenlänge der wechselstrombetriebenen Elektroden über die aktuell geringste Strommenge einer der Elektroden durchgeführt wird.

19. Verfahren nach mindestens einem der Ansprüche 15 bis 17,
**dadurch gekennzeichnet,**
**daß** zusätzlich zur Einbringung von elektrischer Energie über Elektroden Hohlräume in die Charge durch Verbrennen fossiler Brennstoffe in die Charge eingebrannt werden.

20. Metallurgisches Gefäß mit einem mit Feuerfestmaterial ausgekleideten Untergefäß in dessen Boden ein Abstichloch vorgesehen ist und einem Obergefäß, das durch einen Deckel verschließbar ist, bei dem koaxial zur Ofenhauptachse ein Zentralrohr vorgesehen ist, in dem mindestens eine Elektrode angeordnet ist und mit einem das Obergefäß umgreifenden Bauteil, das mit einer Gasabzugseinrichtung verbindbar ist,
**dadurch gekennzeichnet,**
**daß** in der Wandung des Zentralrohres (21) in Längsrichtung ein Schlitz (22) vorgesehen ist und am Schlitzrand eine Hülse (23) befestigt ist, über die das Zentralrohr (21) an dem Mantel des einen korrespondierenden Schlitz (15) aufweisenden Obergefäß befestigbar ist, daß durch den Hohlraum der Hülse (23) ein mit einer außerhalb des Ofens angeordneten Tragsäule (45) verbundener Tragarm (44) bis in das Zentralrohr (21) führbar ist, an dem kopfseitig mindestens eine Elektrode (41) befestigt ist,
**daß** achsparallel zu den Elektroden (41-43) eine an einer Halterung (74) verschiebbar befestigte Aufblaslanze (73) geführt ist, die an einer Anlage zur Förderung von sauerstoffhaltigen Gasen (78) angeschlossen ist,
**daß** mindestens kopfendig an dem Zentralrohr (21) eine Schürze (24) vorgesehen ist, die koaxial zur Ofenmittenachse (I) und achsparallel zu den Elektroden (41-43) angeordnet ist und deren Mündung zum Gefäßboden zeigt, und
**daß** die Schürze (24) axial verschiebbar ist.

21. Metallurgisches Gefäß nach Anspruch 20,
**dadurch gekennzeichnet,**
**daß** die Halterung (74) durch das Zentralrohr (21) hindurch bis oberhalb des Ofenobergefäßes (12) geführt ist.

22. Metallurgisches Gefäß nach Anspruch 20,
**dadurch gekennzeichnet,**
**daß** die Halterung (74) als Biege- und Fördereinrichtung ausgebildet ist, die außerhalb des Ofenobergefäßes (12) angeordnet ist und die Blaslanze (73) in der Weise verbiegt, daß sie durch die Hülse (23) im Bogen geführt mit ihrer Mündung die gewünschte Position an der Ofenhauptachse (I) einnimmt.

23. Verfahren zum Betreiben eines metallurgischen Gefäßes mit einem mit Feuerfestauskleidung versehenen Untergefäß und einem durch einen Deckel verschließbaren Obergefäß, das an eine Gasabzugseinrichtung angeschlossen ist, und in dem achsparallel ein Zentralrohr vorgesehen ist, in dem Elektroden und/oder eine Lanze einbringbar ist, nach den Vorrichtungsansprüchen 19 bis 22,
**gekennzeichnet durch** folgende Schritte:
- Einbringen von kohlenstoffarmen Eiseneinsatzstoffen
- Durchführen des Frischens über eine Sauerstoffaufblaslanze
- gleichzeitiges Chargieren von Roheisen und Zuschlagsstoffen
- anschließendes Abschlacken
- nachfolgend portionsweises Beschicken mit Schrott bei
- gleichzeitigem Erwärmen der Charge **durch** die Ofengase
- Einbringen von Wärmeenergie über einen elektrischen Lichtbogenofen
- bedarfsweise Einbringen von Wärmeenergie **durch** fossile Brennstoffe
- Abschlacken der Restschlacke und abschließend
- Abstechen der Flüssigschmelze unter Belastung eines Sumpfes

## Claims

1. Melting furnace unit for melting metals, in particular steel scrap, having a lower furnace chamber at the bottom of which is provided a tap-hole, and an upper furnace chamber that can be closed by a cover, in which is provided coaxially with the main axis of the furnace a central tube in which is arranged at least one electrode, and over which is provided a component which covers the upper furnace chamber and can be connected to a gas flue device,
**characterised in that**
in the wall of the central tube (21) a longitudinal slot (22) is provided, to the edge of the slot a sleeve (23) is attached, by means of which the central tube (21) can be attached to the shell of the upper furnace chamber (12) which has a corresponding slot (15), and through the hollow shape of the sleeve (23) a support arm (44) connected to a support column (45) arranged outside the furnace can be brought into the central tube (21), at least one electrode (41) being attached to the said arm at the top thereof.

2. Melting furnace unit according to Claim 1,
**characterised in that**
to the support arm (44) can be clamped three electrodes (41-43) operated with alternating current, whose current supply lines (46) are led through the support arm (44).

3. Melting furnace unit according to Claim 2,
**characterised in that**
the support arm (44) is made from a section whose bend-relevant height (H) is in a ratio to its width (B) such that H/B = 1.5 to 2.5 1.

4. Melting furnace unit according to Claim 1,
**characterised in that**
the cover (31) is in the form of a slide plate (32) which can be moved transversely to the main axis (I) of the furnace by a drive mechanism.

5. Melting furnace unit according to Claim 4,
**characterised in that**
on the cover (31) wheels (34) are provided, which run along rails (16) provided on the upper furnace chamber (12).

6. Melting furnace unit according to Claim 1,
**characterised in that**
on the top of the cover (31) carrier elements (35) are provided, by means of which a form-closing connection with the bottom (52) of the material feed container (51) that can be placed over the upper furnace chamber (12) can be formed.

7. Melting furnace unit according to Claim 6,
**characterised in that**
the carrier elements (35) consist of a support plate (36) and a strut (37), and
the support plate (36) extends a distance above the cover (31) such that when the bottom (52) of the container (51) is placed on it, the rim (38) of the cover (31) designed as a guide element is not under load in its guide channel (54) located in the container (51).

8. Melting furnace unit according to Claim 7,
**characterised in that**
on the container (51) brackets (55) are attached, which are centred and rest on support arms (17) attached to the upper furnace chamber (12) and are of length such that they relieve the load on the guide system comprising the guide channel (54) and the guide rim (38).

9. Melting furnace unit according to Claim 1,
**characterised in that**
blocking elements (61) are provided, which can be brought in to interrupt the charge feed flow inside the upper furnace chamber (12).

10. Melting furnace unit according to Claim 9,
**characterised in that**
the blocking elements (61) are swivel flaps that can be swivelled around a swivel axis (II) by a swivel drive system (65), inwards inside the upper furnace chamber (12).

11. Melting furnace unit according to Claim 10,
**characterised in that**
the swivel flaps (61) have a bottom wall (63) and side walls (64) on their front plate (62), which ensure that the furnace is sealed when the flaps (61) have been swivelled inwards.

12. Melting furnace unit according to Claim 9,
**characterised in that**
the blocking elements (61) are formed as prongs (67) that can be pushed into and withdrawn from the inside of the upper furnace chamber (12).

13. Melting furnace unit according to Claim 6,
**characterised in that**
the container (51) has a centrally arranged protective tube (56) closed by a cap (57) and attached to the container wall (59) by means of mounting brackets (58).

14. Melting furnace unit according to Claim 1,
**characterised in that**
an apron (24) is provided, which is coaxial with the central tube (21) and can be moved relative thereto such that the position of the mouth of the central tube (21) surrounding and protecting the electrodes (41 - 43) can be varied.

15. Melting furnace according to any of the preceding claims,
**characterised in that**
lances (71) can be brought into the lower area of the upper furnace chamber (12), which can be connected to supply units for fossil fuel gases (77) and/or gases containing oxygen (78).

16. Method for the operation of a melting furnace unit having a lower furnace chamber at the bottom of which a tap-hole is provided and an upper furnace chamber which can be closed by a cover, and in which a central tube coaxial with the main furnace axis is provided, in which there is at least one electrode, and a gas flue device surrounding the upper furnace chamber, and means for feeding in the charge as in a melting furnace unit according to Claim 1,
**characterised by** the following steps:
- the charge is temporarily stored above the upper furnace chamber closed by the cover,
- the furnace cover is opened and the charge falls into the furnace, and this:
a) before the beginning of furnace operation, into the lower furnace chamber
b) during furnace operation, onto the charge already present in a ring formation inside the upper furnace chamber,
- a cavern is burned in the charge by producing an arc as long as possible by means of the electrodes operated with alternating current and protected by the central tube,
- the melted material is tapped via a tap-hole.

17. Method according to Claim 16,
**characterised in that**
the material flow of the charge present in a ring formation within the upper furnace chamber can be varied in a determinable way by means of holding and/or clamping elements.

18. Method according to Claim 16,
**characterised in that**
the arc length of the alternating current operated electrodes is regulated via the momentary lowest amount of current in one of the electrodes.

19. Method according to at least one of Claims 15 to 17,
**characterised in that**
in addition to the supply of electrical energy via electrodes, hollows in the charge are burned by the combustion of fossil fuels in the charge.

20. Metallurgical vessel having a lower chamber lined with refractory material in the bottom of which is provided a tap-hole and an upper chamber that can be closed by a cover, in which is provided a central tube coaxial with the main furnace axis within which at least one electrode is arranged, and having a component above the upper chamber that can be connected to a gas flue device,
**characterised in that**
a longitudinal slot (22) is provided in the wall of the central tube (21) and to the edge of the slot a sleeve (23) is attached, by which the central tube (21) is attached to the shell of the upper chamber in which there is a corresponding slit (15), through the hollow space of the sleeve (23) a support arm (44) connected to a support column (45) outside the furnace can be introduced into the central tube (21), at least one electrode (41) being attached at the end thereof, parallel to the axis of the electrodes (41 - 43) a blowing lance (73) attached to and able to be moved by a holder (74) is introduced, the said lance being connected to a unit that delivers gases containing oxygen (78), at least at the end of the central tube (21) an apron (24) attached thereto is provided, which is positioned coaxially with respect to the central axis (I) of the furnace and axis-parallel to the electrodes (41 - 43), whose mouth faces the bottom of the chamber, and
the apron (24) can be moved axially.

21. Metallurgical vessel according to Claim 20,
**characterised in that**
the holder (74) is guided through the central tube (21) to above the upper furnace chamber (12).

22. Metallurgical vessel according to Claim 20,
**characterised in that**
the holder (74) is designed as a bending and moving mechanism arranged outside the upper furnace chamber (12), and the blowing lance (73) is bent by it such that after curving it can be introduced through the sleeve (23) and located with its mouth in the desired position on the main axis (I) of the furnace.

23. Method for the operation of a metallurgical vessel having a refractory-lined lower chamber and an upper chamber which can be closed by a lid connected to a gas flue device, and in which, parallel to the axis, is provided a central tube into which electrodes and/or a lance can be introduced, according to equipment Claims 19 to 22,
**characterised by** the following steps:
- low-carbon, ferrous charge material is introduced,
- an oxygen-blow stage is carried out by means of an oxygen blowing lance,
- raw iron and fluxing materials are charged at the same time,
- the slag is then removed,
- the furnace is then partially loaded with scrap and
- at the same time the charge is heated by the furnace gases,
- heat energy is introduced by operation as an electric arc furnace,
- if necessary heat energy is also introduced from fossil fuels,
- the residual slag is then removed, and finally
- the molten metal is tapped off into a sump.

## Revendications

1. Installation de four de fusion pour fondre des métaux, en particulier des ferrailles d'acier, comportant un récipient inférieur de four, dans le fond duquel il est prévu un trou de coulée, et un récipient supérieur de four, qui peut être fermé par un couvercle, dans lequel, coaxialement à l'axe principal du four, il est prévu un tube central, dans lequel est agencée au moins une électrode et sur lequel il est prévu une pièce enveloppant le récipient supérieur de four, qui peut être reliée à un dispositif d'extraction des gaz,
**caractérisée en ce que** :
- dans la paroi du tube central (21), en direction longitudinale, il est prévu une fente (22),
- sur le bord de la fente, il est fixé un manchon (23), par lequel le tube central (21) peut être fixé à l'enveloppe du récipient supérieur de four (12) présentant une fente correspondante (15),
- un bras de support (44) relié à une colonne de support (45) agencée à l'extérieur du four peut être guidé, à travers la cavité du manchon (23), jusque dans le tube central (21) sur lequel, du côté de tête, il est fixé au moins une électrode (41).

2. Installation de four de fusion selon la revendication 1,
**caractérisée en ce que**, sur le bras de support (44), trois électrodes (41 - 43) fonctionnant en courant alternatif peuvent être fixées, dont les amenées de courant (46) sont guidées à travers le bras de support (44).

3. Installation de four de fusion selon la revendication 2,
**caractérisée en ce que** le bras de support (44) est construit à partir d'un profilé dont la hauteur (H), soumise à la flexion, présente, par rapport à sa largeur (B), le rapport H/B = 1,5 à 2,5/1.

4. Installation de four de fusion selon la revendication 1,
**caractérisée en ce que** le couvercle (31) est réalisé comme plaque à coulisse (32) qui peut être déplacée par un entraînement (33) transversalement à l'axe principal du four (I).

5. Installation de four de fusion selon la revendication 4,
**caractérisée en ce que**, sur le couvercle (31), sont prévues des roues (34) qui roulent sur des rails (16) prévus sur le récipient supérieur de four (12).

6. Installation de four de fusion selon la revendication 1,
**caractérisée en ce que**, sur le dessus du couvercle (31), sont prévus des éléments d'entraînement (35), grâce auxquels une liaison avec le fond (52) du récipient d'amenée de matière (51) pouvant reposer sur le récipient supérieur de four (12) peut être obtenue par coopération de formes.

7. Installation de four de fusion selon la revendication 6,
**caractérisée en ce que** les éléments d'entraînement (35) sont constitués d'une plaque d'appui (36) et d'une partie principale (37), et **en ce que** la plaque d'appui (36) s'éloigne du couvercle (31) de manière que, lors de la mise en place du fond (52) du récipient (51) sur celui-ci, le bord (38), réalisé comme guide, du couvercle (31) se relâche dans sa barrette de guidage (54) se trouvant dans le récipient (51).

8. Installation de four de fusion selon la revendication 7,
**caractérisée en ce que**, sur le récipient (51), sont agencées des consoles (55) qui s'appuient de façon centrale sur des bras d'appui (17), qui sont fixés au récipient supérieur de four (12) et présentent une longueur qui permet le relâchement du guide de la barrette de guidage (54) et de la paroi de guidage (38).

9. Installation de four de fusion selon la revendication 1,
**caractérisée en ce que** des éléments d'arrêt (61) sont prévus qui, pour interrompre le courant de transport de la charge, peuvent être agencés dans l'espace interne du récipient supérieur de four (12).

10. Installation de four de fusion selon la revendication 9,
**caractérisée en ce que** les éléments d'arrêt (61) sont des volets pivotants qui peuvent pivoter, par l'intermédiaire d'entraînements pivotants (65), autour d'un axe de pivotement (II) dans l'espace interne du récipient supérieur de four (12).

11. Installation de four de fusion selon la revendication 10,
**caractérisée en ce que** les volets pivotants (61) présentent, sur leur plaque frontale (62), une paroi de fond (63) ainsi que des parois latérales (64), qui garantissent, après le pivotement des volets pivotants (61), l'étanchéité du four.

12. Installation de four de fusion selon la revendication 9,
**caractérisée en ce que** les éléments d'arrêt (61) sont réalisés comme des dents (67), qui peuvent être tirées dans l'espace interne du récipient supérieur de four (12) et retirées de celui-ci.

13. Installation de four de fusion selon la revendication 6,
**caractérisée en ce que** le récipient (51) présente un tube de protection (56) agencé de façon centrale, qui est fermé par un chapeau (57) et est fixé à l'enveloppe de récipient (59) par l'intermédiaire de suspensions (58).

14. Installation de four de fusion selon la revendication 1,
**caractérisée en ce qu'**il est prévu une jupe (24) qui est agencée coaxialement par rapport au tube central (21) et peut être déplacée par rapport à celui-ci de façon que la position de l'embouchure du tube central (21), entourant les électrodes (41 - 43) comme tube de protection, peut être modifiée.

15. Installation de four de fusion selon une des revendications précitées,
**caractérisée en ce que**, dans la zone inférieure du récipient supérieur de four (12), des lances (71) peuvent être agencées, qui peuvent être raccordées à des postes d'alimentation de gaz combustibles fossiles (77) et/ou de gaz (78) contenant de l'oxygène.

16. Procédé pour la mise en oeuvre d'une installation de four de fusion ayant un récipient inférieur de four, dans le fond duquel il est prévu une ouverture de coulée, et un récipient supérieur de four, qui peut être fermé par un couvercle, et dans lequel il est prévu un tube central agencé coaxialement à l'axe principal du four, dans lequel se trouve au moins une électrode, ainsi qu'un dispositif d'extraction des gaz enveloppant le récipient supérieur de four, et des moyens pour amener la charge, avec une installation de four de fusion selon la revendication 1,
**caractérisé par** les étapes suivantes :
- la charge est stockée temporairement au-dessus du récipient supérieur de four fermé par le couvercle,
- par ouverture du couvercle du four, la charge tombe dans l'espace interne du four, et, en vérité,
a) avant le début du fonctionnement du four, jusque dans le récipient inférieur de four,
b) pendant le fonctionnement du four, sur la charge déjà précédemment introduite, se trouvant de façon annulaire dans le récipient supérieur de four,
- en engendrant des arcs électriques les plus longs possibles par des électrodes, fonctionnant en courant alternatif, protégées par le tube central, il est créé, par brûlage, dans la charge, une cavité,
- la matière fondue est coulée par une ouverture de coulée.

17. Procédé selon la revendication 16,
**caractérisé en ce que** le courant de matière de la charge présente de façon annulaire dans le récipient supérieur de four peut être modifié de façon pouvant être prédéfinie par des éléments de maintien et/ou de serrage.

18. Procédé selon la revendication 16,
**caractérisé en ce que** le réglage de la longueur des arcs électriques des électrodes fonctionnant en courant alternatif est effectué par l'intermédiaire de la quantité de courant actuelle la plus faible d'une des électrodes.

19. Procédé selon au moins une des revendications 15 à 17,
**caractérisé en ce que**, de façon supplémentaire à l'introduction d'une énergie électrique par l'intermédiaire d'électrodes, des cavités dans la charge sont créées par brûlage de combustibles fossiles dans la charge.

20. Récipient métallurgique, comportant un récipient inférieur revêtu d'une matière réfractaire, dans le fond duquel il est prévu un trou de coulée, et un récipient supérieur, qui peut être fermé par un couvercle, dans lequel il est prévu, coaxialement à l'axe principal du four, un tube central dans lequel il est agencé au moins une électrode, et comportant une pièce enveloppant le récipient supérieur, qui peut être reliée à un dispositif d'extraction des gaz,
**caractérisé en ce que** :
- dans la paroi du tube central (21), en direction longitudinale, il est prévu une fente (22) et, sur le bord de la fente, il est fixé un manchon (23), par lequel le tube central (21) peut être fixé à l'enveloppe du récipient supérieur présentant une fente correspondante (15),
- un bras de support (44) relié à une colonne de support (45) agencée à l'extérieur du four peut être guidé, à travers la cavité du manchon (23), jusque dans le tube central (21), sur lequel, du côté de tête, il est fixé au moins une électrode (41),
- parallèlement à l'axe par rapport aux électrodes (41 - 43), il est guidé une lance de soufflage (73) fixée de façon déplaçable sur un support (74), laquelle est raccordée à une installation pour l'amenée de gaz contenant de l'oxygène (78),
- au moins du côté de tête sur le tube central (21), il est prévu une jupe (24) qui est agencée coaxialement à l'axe central du four (I) et parallèlement à l'axe par rapport aux électrodes (41 - 43) et dont l'embouchure est dirigée vers le fond du four, et
- la jupe (24) est déplaçable axialement.

21. Récipient métallurgique selon la revendication 20,
**caractérisé en ce que** le support (74) est guidé à travers le tube central (21) jusqu'au-dessus du récipient supérieur de four (12).

22. Récipient métallurgique selon la revendication 20,
**caractérisé en ce que** le support (74) est réalisé comme dispositif de transport et de cintrage, qui est agencé à l'extérieur du récipient supérieur de four (12) et courbe la lance de soufflage (73) de façon qu'elle prenne la position souhaitée sur l'axe principal du four (I), par son embouchure, en étant guidée à travers le manchon (23) en courbe.

23. Procédé pour la mise en oeuvre d'un récipient métallurgique, comportant un récipient inférieur muni d'un revêtement réfractaire et un récipient supérieur pouvant être fermé par un couvercle, qui est raccordé à un dispositif d'extraction des gaz, et dans lequel, parallèlement à l'axe, il est prévu un tube central, dans lequel peuvent être agencées des électrodes et/ou une lance, selon les revendications de dispositif 19 à 22,
**caractérisé par** les étapes suivantes :
- introduction de matières à base de fer pauvres en carbone,
- mise en oeuvre de la décarburation par l'intermédiaire d'une lance de soufflage d'oxygène,
- chargement simultané de fer brut et de fondants,
- élimination suivante des scories,
- chargement par portions successif par des ferrailles, en
- chauffant simultanément la charge par les gaz du four,
- amenant de l'énergie calorifique par l'intermédiaire d'un four à arc électrique,
- amenant, si cela est nécessaire, de l'énergie calorifique par des combustibles fossiles,
- élimination des scories résiduelles et, enfin,
- coulée de la matière en fusion liquide en chargeant un bassin de coulée.
